# EUROPEAN PATENT APPLICATION

(11) **EP 2 768 207 A1**
(43) Date of publication of application: **20.08.2014**
(21) Application number: 12840348.2
(22) Date of filing: 21.09.2012
(51) Int. Cl.: H04M 1/00, G08B 21/10, G08B 25/10, G08B 27/00, H04M 1/73, H04M 11/00

(54) **COMMUNICATION TERMINAL AND WARNING INFORMATION ACQUIRING METHOD**

(30) Priority: 13.10.2011 JP 2011226223
(71) Applicant: NTT DOCOMO, INC., Chiyoda-ku Tokyo 100-6150 (JP)
(72) Inventor: SHIKAMA, Hiroki, 1006150 Tokyo (JP); SASAKI, Makoto, 1006150 Tokyo (JP); HIGUCHI, Takeshi, 1006150 Tokyo (JP)
(74) Representative: Maury, Richard Philip
(86) International application number: PCT/JP2012/074291
(87) International publication number: WO 2013/054653

(57) **Abstract**

A communication terminal includes a first receiving unit configured to receive communication signals in a first communication system, a second receiving unit configured to receive communication signals in a second communication system, a monitoring mode selection unit configured to select a monitoring mode from a plurality of the monitoring modes with different cycles for activating the second receiving unit, an activation control unit configured to activate the second receiving unit according to the monitoring mode selected by the monitoring mode selection unit in the case where the first receiving unit receives communication signals including first warning information, and an interface unit configured to provide second warning information extracted from communication signals received by the second receiving unit.

## Description

### TECHNICAL FIELD

The present invention relates to a communication terminal and a warning information obtaining method.

### BACKGROUND ART

Recent years, unprecedented natural disasters have occurred in our country and foreign countries, and an interest in disaster countermeasures is increasing enormously more than ever before. In order to reduce damage caused by these kinds of disasters as much as possible, many of cellular type mobile communication systems, by way of broadcasting emergency warning information such as an earthquake early warning, report an emergency situation to many users promptly. These kinds of broadcasting services are described in, for example, non-patent document 1.

However, at the time of a disaster, it tends to become difficult for a cellular type mobile communication system to provide communication services due to base station damage, network congestion, etc. On the other hand, communication systems that provide digital terrestrial television broadcasting for mobile terminals are able to provide communication services at the time of such disasters in a relatively stable manner. Therefore, a user of a mobile terminal that can receive television signals can receive, even at the time of a disaster, emergency warning information from television signals relatively reliably. But in order to receive emergency warning information in digital terrestrial television broadcasting, it is necessary for a mobile terminal to be receiving digital terrestrial television broadcasting waves. That is, the mobile terminal has to be activated for receiving digital terrestrial television broadcasting waves, which raises a concern that the power consumption of the mobile terminal becomes fairly high. In this regard, it is different from a cellular type mobile communication system in which a mobile terminal can receive a broadcast of emergency warning information only if it is in a standby mode.

Considering these problems, with an invention described in patent document 1, a mobile terminal with a television receiving function, in response to receiving an email or moving out of communication area, activates the television receiving function and receives an emergency broadcast.

### RELATED ART DOCUMENT

[PATENT DOCUMENT 1] Japanese Patent Application Publication No. 2007-142744
[NON-PATENT DOCUMENT 1] NTT DoCoMo Technical Journal Vol. 15, No. 4, 2008

### SUMMARY OF THE INVENTION

### PROBLEM TO BE SOLVED BY THE INVENTION

However, in the case of the invention described in patent document 1, the mobile terminal has to activate the television receiving function and keep monitoring digital terrestrial television broadcasting thereafter in the case where it receives an email or it moves out of communication area. As a result, the power consumption of the mobile terminal is still high, and in some cases it is a concern that the little remaining battery life may end unexpectedly quickly and emergency warning information cannot be received at all thereafter.

It is an object of the present invention to enable a communication terminal, which is capable of communicating in both the first communication system such as the one providing cellular type mobile communication services and the second communication system such as the one providing digital terrestrial television broadcasting, to receive warning information reliably without consuming excess electricity.

### MEANS FOR SOLVING THE PROBLEM

A communication terminal according to an embodiment of the present invention is a communication terminal that includes a first receiving unit configured to receive communication signals in a first communication system, a second receiving unit configured to receive communication signals in a second communication system, a monitoring mode selection unit configured to select one of a plurality of the monitoring modes with different cycles for activating the second receiving unit, an activation control unit configured to activate the second receiving unit according to the monitoring mode selected by the monitoring mode selection unit in the case where the first receiving unit receives the communication signals including first warning information, and a user interface unit configured to provide a second warning information extracted from the communication signals received by the second receiving unit.

### EFFECT OF THE PRESENT INVENTION

According to an embodiment of the present invention, a communication terminal, which is capable of communicating in both the first communication system and the second communication system, can receive warning information reliably without consuming excess electricity.

### BRIEF DESCRIPTION OF THE DRAWINGS

FIG. 1 is a drawing illustrating a communication system overview.
FIG. 2 is a functional block diagram of a communication terminal.
FIG. 3 is a drawing for describing emergency signal monitoring modes.
FIG. 4 is a flowchart illustrating an example of operations (in the case of selecting a monitoring mode based on communication quality).
FIG. 5 is a flowchart illustrating an example of operations (in the case of selecting a monitoring mode based on remaining battery energy).
FIG. 6 is a flowchart illustrating an example of operations (in the case of selecting a monitoring mode based on a predefined procedure).

### EMBODIMENTS FOR CARRYING OUT THE INVENTION

In the following, embodiments of the present invention will be described with reference to the accompanying drawing. The same referral numbers or symbols are used for the same elements. The present invention will be described from the following aspects.
1. Communication system
2. Communication terminal
3. Examples of operations
3. 1 A case of selecting a monitoring mode based on communication quality
3. 2 A case of selecting a monitoring mode based on remaining battery energy
3. 3 A case of selecting a monitoring mode based on a predefined procedure

### < 1. Communication system >

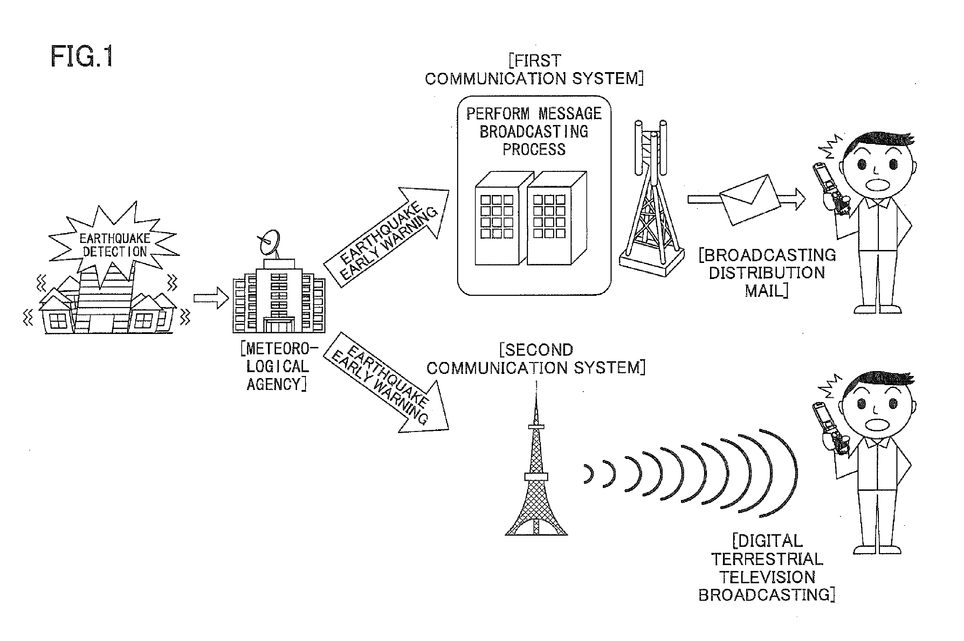

FIG. 1 is a drawing illustrating an overview of a communication system that can be used in an embodiment of the present invention. In FIG. 1, of various nodes, elements and processing units, those especially related to the present embodiment are shown. As shown in the figure, in the case where an emergency situation such as an earthquake occurs, a meteorological agency reports earthquake early warning information to various communication systems. For the sake of illustration simplicity, only a first communication system and a second communication system are shown, but the number and the kind of communication systems, which receive information from a meteorological agency and broadcast the information to users, can be any number and any kind. Not limited to a meteorological agency but any organization or institution such as, for example, a local government that has some authority may broadcast such information. Also, not only earthquake early warning information but also any warning information may be broadcast. For example, tsunami warning information, high tide warning information, flood warning information, volcanic phenomenon warning information, etc., may be broadcast. Furthermore, not only information resulting from a natural disaster but also information resulting from a human-made disaster such as an international conflict may be broadcast.

The first communication system, which is a cellular type mobile communication system shown in the figure as an example, provides voice communication services, data communication services, etc., to users. For example, warning information from a cell broadcast entity (CBE) such as a meteorological agency is broadcast to users in a certain area as a cell broadcast service (CBS), for example. To be more precise, the warning information from the CBE is received by a cell broadcast center of the first communication system, a broadcast area is determined, and the warning information is, through a switching center and a base station, broadcast to users by email.

The second communication system is a communication system that provides digital terrestrial television broadcasting for mobile terminals in an example shown in the figure. For example, the warning information from the meteorological agency is received by each of a plurality of broadcast stations. The fact that, for the sake of illustration simplicity, it is not explicitly shown in the figure that there exist a plurality of broadcast stations should be noted. The broadcast station, using a channel or a frequency resource allocated to own station, broadcasts emergency warning. Specifically, each broadcast station, using one of 13 segments, performs one-segment broadcasting for mobile terminals (so called one-seg service). The broadcasting signal of one segment broadcasting (one segment signal) includes transmission data indicating voice or video, control information (TMCC), a pilot signal (SP), and an auxiliary information signal for future extension (Auxiliary Channel: AC). In the case of an emergency situation, in this AC signal, warning information such as an earthquake early warning is included.

As described above, at the time of a disaster, it tends to become difficult for a first communication system such as a cellular type mobile communication system to provide communication services. For example, resulting from a tsunami right after an earthquake, base stations at not-so-high locations are likely to become not functioning properly. On the other hand, a second communication system that provides digital terrestrial television broadcasting for mobile terminals is able to provide communication services even at the time of such disasters in a relatively stable manner. For example, in many cases, broadcasting towers for broadcasting television signals function properly even after a tsunami. However, in order to receive emergency warning information in digital terrestrial television broadcasting, it is necessary for a mobile terminal to be activated, which raises a concern that the power consumption of the mobile terminal may become fairly high. In this regard, it is different from a cellular type mobile communication system in which a mobile terminal can receive a broadcast of emergency warning information only if it is in a standby mode.

Meanwhile, both the warning information included in the email from the first communication system and the warning information included in the television signal from the second communication system are the same in that both are information for warning at the time of an emergency situation such as an earthquake. But the warning information included in the television signal includes more information compared to the warning information included in the email. Therefore, as a usage example, it may be considered to activate a function receiving television signals of the second communication system in response to receiving an email including warning information in the first communication system. By this, warning information can be obtained reliably at least from one of the first communication system and the second communication system. Because receiving television signals only starts after the occurrence of an emergency situation becomes evident through the first communication system, compared to the case of receiving television signals from before the occurrence of an emergency situation, power consumption can be reduced. According to the present embodiment, power consumption can be further reduced by using a method described later.

### < 2. Communication terminal >

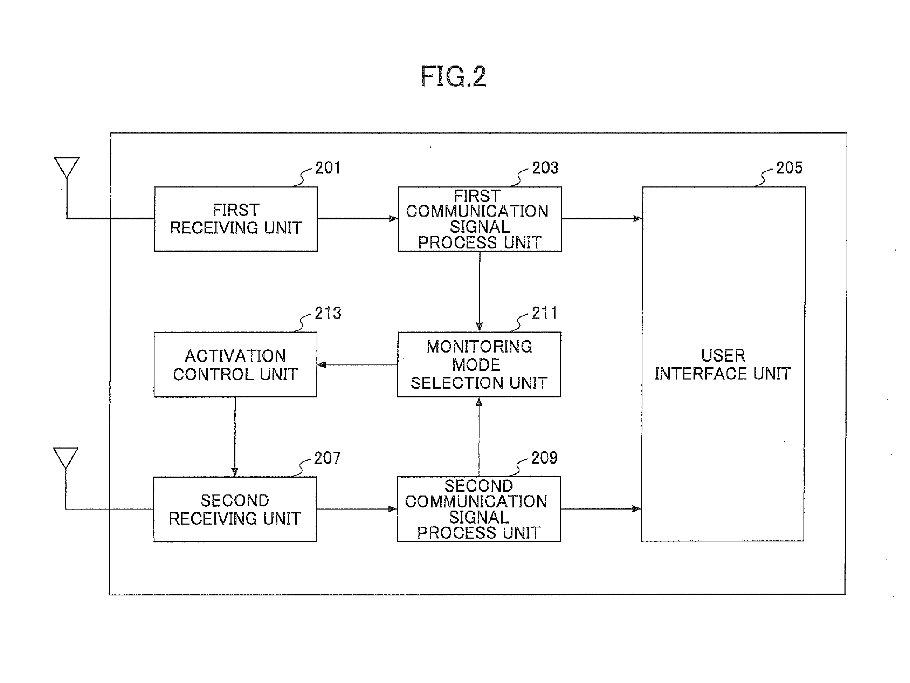

FIG. 2 illustrates a functional block diagram of a communication terminal available for a user in the communication system shown in FIG. 1. In FIG. 2, of various processing units and function units included in a communication terminal, those especially related to the present embodiment are shown. The communication terminal may be any appropriate device that can operate in both a cellular type mobile communication system and a communication system that provides digital terrestrial television broadcasting. The communication terminal may be, specifically, a user terminal, a mobile phone, an information terminal, an advanced mobile phone, a smart phone, a tablet type computer, a personal digital assistant, a portable personal computer, a palm top computer, a laptop computer, etc., but is not limited to them. The communication terminal includes at least a first receiving unit 201, a first communication signal processing unit 203, a user interface unit 205, a second receiving unit 207, a second communication signal processing unit 209, a monitoring mode selection unit 211 and an activation control unit 213.

The first receiving unit 201 receives communication signals in a first communication system such as a cellular type mobile communication system. Such communication signals include communication signals in a telephone service (for example, an incoming signal, an outgoing signal), communication signals in a data communication service (for example, an email message, a file or other data signals), etc., but are not limited to them.

The first communication signal processing unit 203 decodes communication signals received by the first receiving unit 201, analyzes them, and provides decoded signals as necessary to the user interface unit 205. Specifically in the present embodiment, the first communication signal processing unit 203 determines whether the communication signals include warning information such as an earthquake early warning, and in the case where it is included, provides the warning information to the user interface unit 205. To be more precise, the first communication signal processing unit 203 determines whether the communication signals include a predefined email message or not. The predefined email message is, for example, an email message in a Cell Broadcast Service (CBS) (for example, an Area Message (registered trademark)). Generally, a CBS is a service for broadcasting simple character information. Warning information such as an earthquake early warning is broadcast by a CBS. The warning information may be outputted visually or aurally or both visually and aurally through the user interface unit 205. Furthermore, when the warning information is provided for a user, a vibrator may be activated for drawing the user's attention. The information regarding whether warning information or a predefined email message is received or not is reported to the monitoring mode selection unit 211 and the activation control unit 213.

Also, the first communication signal processing unit 203 measures a quality or a reception level of the communication signals (typically, a pilot signal) in the first communication system and reports a measured result to the monitoring mode selection unit 211. The quality may be expressed by any appropriate index in the technology field. As an example, the quality or the reception level may be expressed by received power level, Received Signal Strength Indicator RSSI, Received Signal Code Power RSCP, path loss, SNR, SIR, Ec/No, etc.

The user interface unit 205 performs a function for providing information to a user and a function for obtaining information inputted from a user. The user interface unit 205 may function as any visual, aural, or mechanical user interface. For example, the user interface unit 205 typically includes selectable buttons, but may be configured with any mechanical operation unit such as a keyboard, a mouse, a track ball, etc. Also, the user interface unit 205 may be, in order to execute an operation spoken by a user, configured with a voice input unit such as a microphone, or a voice output unit such as a loud speaker for providing a user with certain information with voice sound. For example, information of communication signals received from the first or the second receiving units 201, 207 may be outputted with voice sound, or the guidance prompting operations of the communication terminal may be outputted with voice sound. Furthermore, the user interface unit 205 may be configured with a visual display unit for visually outputting information. Such display units are, for example, a display, a control panel with keypad, a Cathode-Ray Tube (CRT), a Liquid Crystal Display (LCD), an organic EL panel, a touch screen, etc., but are not limited to them. In the present embodiment, the display unit with which the user interface unit 205 is configured is covered by a touch sensor type transparent panel and is capable of detecting the user's finger movement for controlling the communication terminal's operation.

The second receiving unit 207 receives communication signals of the second communication system that is providing digital terrestrial television broadcasting. In the case of the digital terrestrial television broadcasting, it receives, for example, communication signals of the one-segment broadcasting that are being sent by Orthogonal Frequency Division Multiplexing (OFDM) method. Such communication signals include transmission data indicating voice, video, etc., control information (TMCC), a pilot signal (SP), and an auxiliary information signal for future extension (Auxiliary Channel: AC). In the case of an emergency situation, in this AC signal, warning information such as an earthquake early warning is included.

The second communication signal processing unit 209 decodes communication signals received by the second receiving unit 207, analyzes them, and provides decoded signals as necessary to the user interface unit 205. Specifically in the present embodiment, the second communication signal processing unit 209 determines whether the communication signals such as an AC signal include warning information such as an earthquake early warning, and in the case where it is included, provides the warning information to the user interface unit 205. In the case where a natural disaster or a human-made emergency situation is occurring, warning information is included in the AC signal, but in the case where such emergency situations are not occurring, the warning information is not included in the AC signal. The warning information may be outputted visually or aurally or both visually and aurally through the user interface unit 205. Furthermore, when the warning information is provided for a user, the vibrator may be activated for drawing the user's attention. The information regarding whether warning information is received or not is reported to the monitoring mode selection unit 211.

The monitoring mode selection unit 211, in the case where the first receiving unit 201 receives communication signals including the first warning information, of a plurality of monitoring modes that have different cycles for activating the second receiving unit 213, determines which monitoring mode the second receiving unit 213 should operate with.

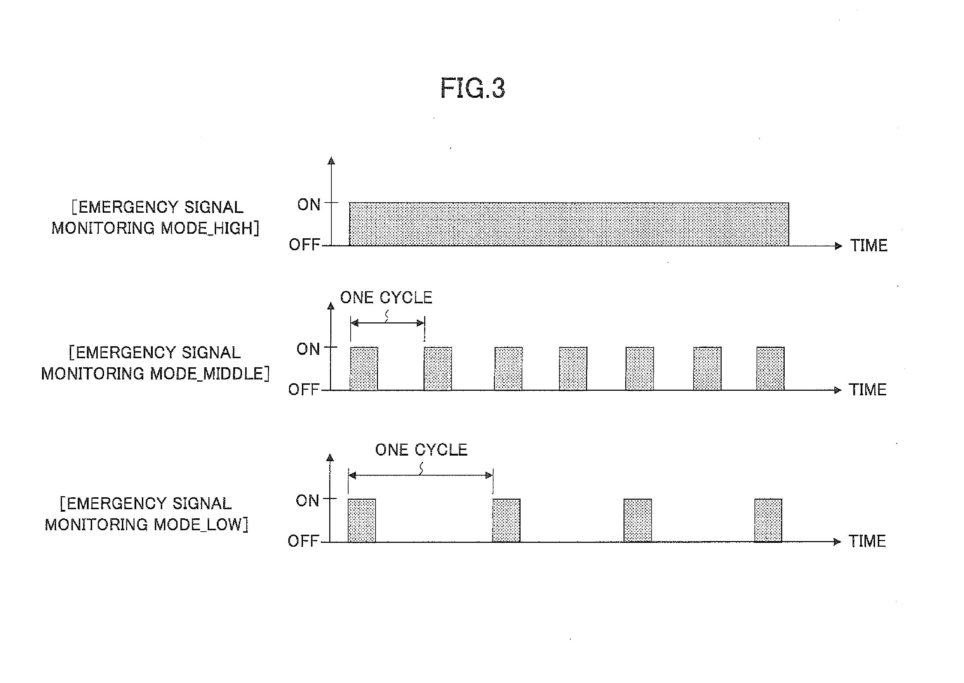

FIG. 3 illustrates a specific example of a plurality of monitoring modes. In an example illustrated in the figure, three monitoring modes are shown. Monitoring modes are operation modes for the second receiving unit 213 to receive the AC signal all the time or intermittently in order to determine whether warning information exists or not. In the case of a monitoring mode indicated by "EMERGENCY SIGNAL MONITORING MODE_HIGH", the second receiving unit 213 is activated all the time. In the present embodiment, the mode, in which the second receiving unit 213 is activated all the time is defined as a monitoring mode in which the second receiving unit is activated with the shortest cycle. The "cycle" is defined to be a period between the point when the second receiving unit 213 is activated and the point when it is next activated. Therefore, in the case of receiving all the time, the cycle is zero. In the case of a monitoring mode indicated by "EMERGENCY SIGNAL MONITORING MODE_LOW", the cycle with which the second receiving unit 213 is activated is the longest. In the case of a monitoring mode indicated by "EMERGENCY SIGNAL MONITORING MODE_MIDDLE", the cycle with which the second receiving unit 213 is activated is longer than the shortest and shorter than the longest. For the sake of convenience, 3 cycles are shown for activating the second receiving unit 213, but more than 3 cycles may be used, or only 2 cycles may be used. In any case, the monitoring mode selection unit 211 selects, of a plurality of monitoring modes in which cycles for activating the second receiving unit 213 are different, any one of the monitoring modes.

Regarding the selection of monitoring mode, it can be performed based on various criteria. For example, the monitoring mode can be selected based on the quality of communication signals in the first communication system (for example, a cellular communication system). As an example, in the case where the quality of communication signals in the first communication system is good, EMERGENCY SIGNAL MONITORING MODE_LOW may be selected; in the case where the quality is bad, EMERGENCY SIGNAL MONITORING MODE_HIGH may be selected; and in the case where the quality is not good but not bad, EMERGENCY SIGNAL MONITORING MODE_MIDDLE may be selected. This kind of selection method is preferable from the view point of obtaining warning information from the first communication system in the case where the warning information can be received reliably from the first communication system while saving the battery energy.

As another example, in the case where the remaining battery energy of the communication terminal is low, EMERGENCY SIGNAL MONITORING MODE_LOW may be selected, in the case where the remaining battery is high, EMERGENCY SIGNAL MONITORING MODE_HIGH may be selected, and in the case where the remaining battery is not high but not low, EMERGENCY SIGNAL MONITORING MODE_MIDDLE may be selected. This kind of selection method is preferable from the view point of reducing battery power consumption depending on the remaining battery energy of the communication terminal. A function of measuring remaining battery energy may be performed by the monitoring mode selection unit 211, or the remaining battery energy measured by an element not shown in the figure may be reported to the monitoring mode selection unit 211.

As a yet another example, monitoring modes may be changed as the time goes by. For example, EMERGENCY SIGNAL MONITORING MODE_HIGH may be used for a certain period, EMERGENCY SIGNAL MONITORING MODE_MIDDLE may be used for the next certain period, EMERGENCY SIGNAL MONITORING MODE_LOW may be used for the next certain period, EMERGENCY SIGNAL MONITORING MODE_HIGH may be used again for the next certain period, and the same mode selection may be made thereafter. Or, on the contrary, EMERGENCY SIGNAL MONITORING MODE_LOW may be used for a certain period, EMERGENCY SIGNAL MONITORING MODE_MIDDLE may be used for the next certain period, EMERGENCY SIGNAL MONITORING MODE_HIGH may be used for the next certain period, EMERGENCY SIGNAL MONITORING MODE_LOW may be used again for the next certain period, and the same mode selection may be made thereafter. This kind of selection method is preferable from the view point of saving battery energy while keeping the probability of obtaining the warning information higher than a certain level. A function of measuring elapsed time may be performed by the monitoring mode selection unit 211, or a time measured by an element not shown in the figure may be reported to the monitoring mode selection unit 211.

The activation control unit 213 in FIG. 2 controls activation statuses of the first receiving unit 201 and the second receiving unit 207 based on the notifications from the first communication signal processing unit 203 and the monitoring mode selection unit 211. The specific control method will be described later, but in general, the activation control unit 213 activates the first receiving unit 201 first, and in the case where the first receiving unit 201 receives communication signals including the first warning information, it activates the second receiving unit 207 based on the monitoring mode selected by the monitoring mode selection unit 211.

### < 3. Examples of operations >

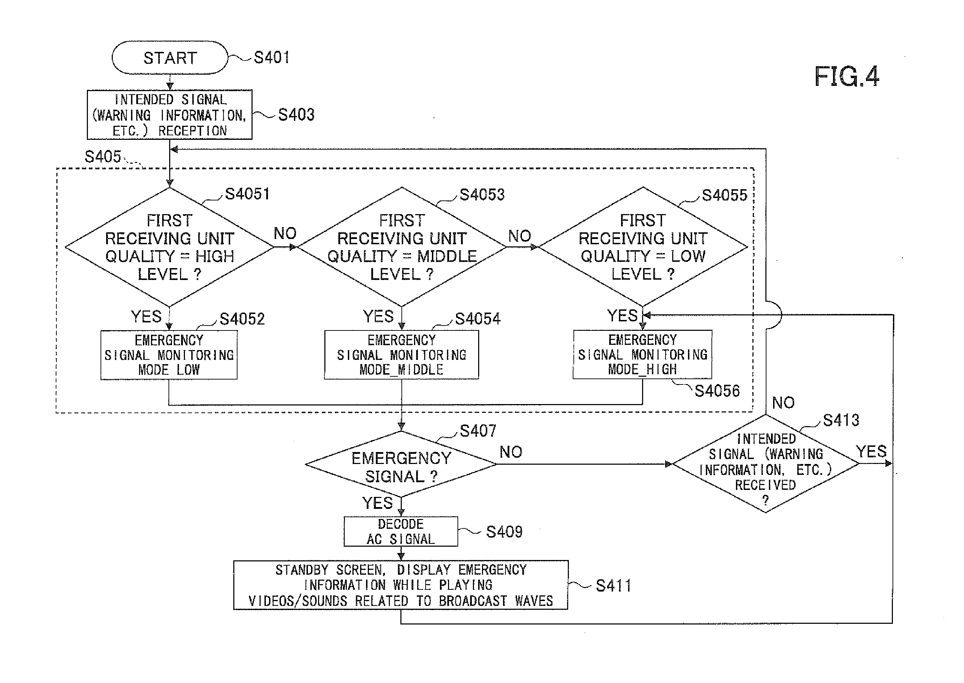

In the following, examples of operations performed by the communication terminal in FIG. 2 will be described referring to FIGs. 4 through 6. The three examples to be described are just examples that can be used in the present embodiment, and other operations may be performed without departing from the scope of the present invention.

### << 3. 1 A case of selecting a monitoring mode based on communication quality >>

The flow shown in FIG. 4 starts from step S401. As an assumption for the following operations, a communication terminal is operating in the first communication system that is a cellular type mobile communication system. That is, the communication terminal, having the first receiving unit 201 (FIG. 2) activated, is receiving communication signals. At the stage of step S401, the communication terminal is not supposed to have activated the second receiving unit 207 for receiving television signals.

Because the communication terminal is operating in the cellular type mobile communication system, in the case where an emergency situation such as, for example, an earthquake occurs, the communication terminal, in step S403, receives an email message (intended signal) by a Cell Broadcast Service (CBS). By this, a user is able to know that an emergency situation has occurred. In the case where such an emergency situation occurs, various kinds of warning information such as an earthquake early warning, a tsunami warning, etc., are broadcast repeatedly and every time when it is updated. Therefore, there is a need for the user, who has received the warning information, to reliably obtain warning information broadcast one after another thereafter, and to take appropriate actions.

However, when such an emergency situation occurs, it is a concern that with the cellular type mobile communication system, communications may become unavailable. For example, due to a fault or congestion of a base station or a switching center, communication services may be restricted. Or, it is also a concern that a base station may not operate properly any more due to an earthquake or a tsunami. On the other hand, in this kind of emergency situation case, communication signals including warning information are also sent from the second communication system that is providing digital terrestrial television broadcasting. For the sake of convenience, the warning information included in the communication signals of the first communication system of the cellular type mobile communication system is referred to as "the first warning information", and the warning information included in the communication signals of the second communication system that is providing digital terrestrial television broadcasting is referred to as "the second warning information". Normally, regarding the first warning information, it is intended that information required as a minimum for a warning such as "earthquake", "earthquake and tsunami", "epicenter", etc., is promptly sent as an email. On the other hand, regarding the second warning information, it is intended that it is sent as television signals. Therefore, in general, the second warning information includes more information than the first warning information. Because of this, in the case where the communication terminal receives email that includes warning information (intended signal) in step S403, the second receiving unit 207 is activated in step S405, and the communication terminal is enabled to receive electric waves of digital terrestrial television broadcasting according to any one of the monitoring modes.

In step S4051, it is determined by the communication terminal whether the quality of communication signals received by the first receiving unit 201 corresponds to the level of high quality (HIGH LEVEL) or not. For the sake of convenience, the quality of communication signals is supposed to be expressed by one of three qualities, high quality, middle quality and low quality, which is not essential for the present invention. Any number of monitoring modes and corresponding levels of more than one may be specified. For example, only two levels, high quality and low quality, may be specified. Four levels such as the highest quality, high quality, low quality, the lowest quality, may be specified. In the case where the quality of communication signals corresponds to the level of high quality (HIGH LEVEL), the flow moves to step S4052.

In step S4052, the monitoring mode selection unit 211 of the communication terminal selects EMERGENCY SIGNAL MONITORING MODE_LOW as the monitoring mode for activating the second receiving unit 207. As shown in FIG. 3, In the case of EMERGENCY SIGNAL MONITORING MODE_LOW, the cycle with which the second receiving unit 207 is activated is the longest. That is, the frequency per unit time with which the communication signals of the second communication system are monitored is the lowest. In the case where the flow reaches step S4052, because the communication signals in the first communication system are of high quality, there is a high probability that the user can receive the first warning information at least from the first communication system. Because of this, it is advantageous to reduce power consumption by reducing the frequency of monitoring the second warning information from the second communication system.

In step S4051, In the case where the quality of communication signals received from the receiving unit 201 does not correspond to the level of high quality (HIGH LEVEL), the flow moves to step S4053.

In step S4053, it is determined whether the quality of communication signals received by the first receiving unit 201 corresponds to the level of middle quality (MIDDLE LEVEL) or not. In the case where the quality of communication signals corresponds to the level of middle quality (MIDDLE LEVEL), the flow moves to step S4054.

In step S4054, the monitoring mode selection unit 211 selects EMERGENCY SIGNAL MONITORING MODE_MIDDLE as a monitoring mode for activating the second receiving unit 207. As it is shown in FIG. 3, in the case of EMERGENCY SIGNAL MONITORING MODE_MIDDLE, the cycle for activating the second receiving unit 207 is shorter than the one in the case of EMERGENCY SIGNAL MONITORING MODE_LOW. In the case where the flow reaches step S4054, because the communication signals in the first communication system are not of high quality, it cannot be said that there is a very high probability that the user can receive the first warning information from the first communication system. Because of this, it is advantageous to increase the probability of receiving the second warning information by increasing slightly the frequency of monitoring the second warning information from the second communication system.

In step S4053, in the case where the quality of communication signals received from the first receiving unit 201 does not correspond to the level of middle quality (MIDDLE LEVEL), the flow moves to step S4055.

In step S4055, it is determined whether the quality of communication signals received by the first receiving unit 201 corresponds to the level of low quality (LOW LEVEL) or not. In the case where the quality of communication signals corresponds to the level of low quality (LOW LEVEL), the flow moves to step S4056.

In step S4056, the monitoring mode selection unit 211 of the communication terminal selects EMERGENCY SIGNAL MONITORING MODE_HIGH as a mode for activating the second receiving unit 207. As it is shown in FIG. 3, in the case of EMERGENCY SIGNAL MONITORING MODE_HIGH, the second receiving unit 207 is activated all the time. Because one cycle is a period between the points of activation, the cycle in EMERGENCY SIGNAL MONITORING MODE_HIGH is a minimum (cycle = 0). In the case where the flow reaches step S4056, because communication signals in the first communication system are of low quality, it is difficult to expect that the first warning information is to be received from the first communication system. Because of this, it is advantageous to increase the probability of receiving the second warning information by significantly increasing the frequency of monitoring the second warning information from the second communication system.

In the case of the current embodiment, because the quality of communication signals corresponds to any one of three levels, in the case where the determination result in step S4053 is "NO", the flow may move directly to step S4056 without going through step S4055. Also, in an embodiment shown in the figure, it is determined in sequence whether the quality of communication signals corresponds to high quality, middle quality or low quality, which is not essential, and determinations in step S4051, S4053 and S4055 may be performed in parallel.

In step S407, it is determined whether an AC signal included in communication signals of the second communication system includes the second warning information (emergency signal) or not. In the case where the emergency signal is included, the flow moves to step S409.

In step S409, the second communication signal processing unit 209 of the communication terminal decodes the AC signal, and extracts the second warning information.

In step S411, the extracted second warning information is provided to the user by the user interface unit 205. For example, the warning information may be displayed on the standby screen of digital terrestrial television broadcasting. Or, the warning information may be displayed within or around the display are of the program being broadcast by the digital terrestrial television broadcasting. In the case where the second warning information can be provided to the user in step S411, it is expected that the communication terminal can receive appropriately communication signals from the second communication system thereafter. In this case, it is preferable to continue obtaining the second warning information, whose information volume is large, from the second communication system, and providing it to the user. Therefore, the flow moves to step S4056 and the second warning information is monitored frequently.

On the other hand, in step S407, in the case where it is determined that the second warning information is not included in the AC signal, the flow moves to step S413. In the case where the second emergency signal is not included in communication signals from the second communication system, the communication terminal should save its battery energy as much as possible. Therefore, in step S413, the communication terminal checks whether an email message (intended signal) by the Cell Broadcast Service is received or not.

In the case where the flow reaches step S413, the communication terminal had received an intended signal in the past (at least in step S403). That is, an emergency situation occurred at that time in the past. Therefore, even in the case where an intended signal is not received in step S413, there is a high probability that the emergency situation has not been removed. Therefore, the communication terminal should monitor the emergency signal from the second communication system, whose information volume is large. However, because there is a possibility that the environment for receiving communication signals from the first communication system has been changed, the flow returns to step S405, and an emergency signal monitoring mode, which is appropriate for the current communication situation, is selected. Thereafter, processes that have already been described are performed.

On the other hand, in step S413, in the case where the intended signal is received, because the emergency situation still continues, emergency signals from the second communication system, whose information volume is large, should be monitored. Therefore, the flow moves to step S4056, and the second warning information is monitored frequently. Thereafter, processes that have already been described are performed.

### << 3. 2 A case of selecting a monitoring mode based on remaining battery energy>>

In an example of operations shown in FIG. 4, a frequency or a cycle for monitoring the second warning information from the second communication system (that is, a monitoring mode) is determined based on the receiving quality of communication signals from the first communication system. However, this is not essential for the present invention, and the monitoring mode may be determined based on other view points.

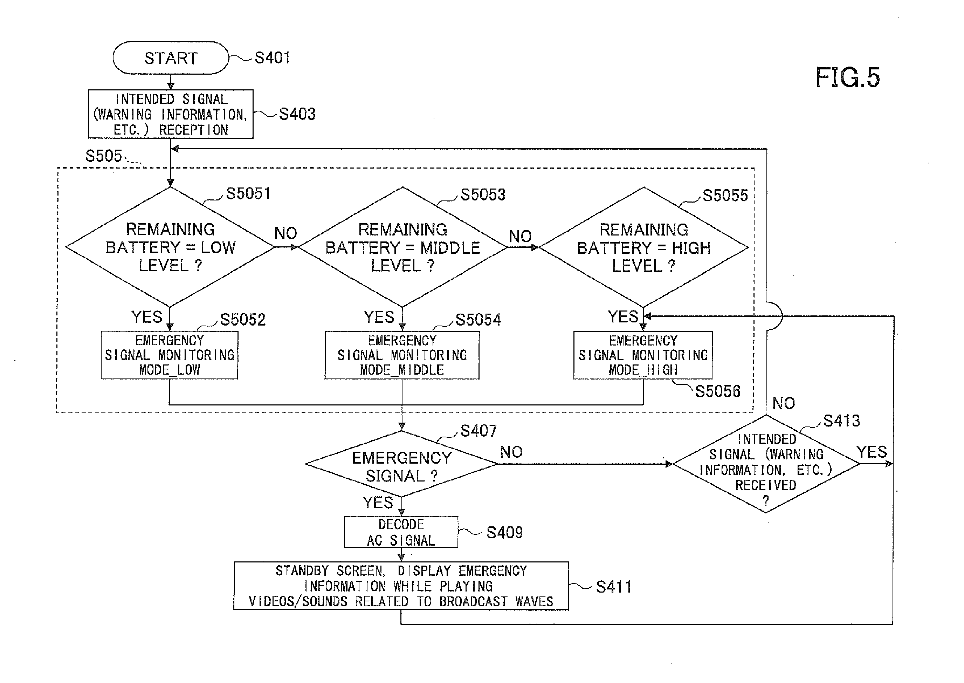

FIG. 5 shows an example of operation in the case of selecting a monitoring mode based on the remaining battery energy. It is, in general, the same as an example of operation shown in FIG. 4, but it differs mainly in that the process of step S505 is performed instead of step S405 of FIG. 4. The same referral numbers are given to the processes that are already described in FIG. 4, and redundant description will be omitted.

In step S5051, the communication terminal checks the remaining battery energy that is being used by the communication terminal, and determines whether the remaining battery energy corresponds to LOW LEVEL. For the sake of convenience, the remaining battery energy is supposed to be expressed by one of three levels of LOW LEVEL, MIDDLE LEVEL, and HIGH LEVEL, but this is not essential for the present invention. Any number, equal to or more than two, of levels may be specified corresponding to the number of monitoring modes to be used. In the case where the remaining battery corresponds to LOW LEVEL, the flow moves to step S5052.

In step S5052, the monitoring mode selection unit 211 of the communication terminal selects EMERGENCY SIGNAL MONITORING MODE_LOW as a monitoring mode for activating the second receiving unit 207. As shown in FIG. 3, in the case of EMERGENCY SIGNAL MONITORING MODE_LOW, the cycle for activating the second receiving unit 207 is the longest. That is, the frequency per unit time with which the communication signals of the second communication system are monitored is the lowest. In the case where the flow reaches step S5052, because the remaining battery energy of the communication terminal is a little, the battery consumption should be reduced as much as possible.

In step S5051, in the case where the remaining battery energy does not correspond to LOW LEVEL, the flow moves to step S5053.

In step S5053, it is determined whether the remaining battery energy corresponds to MIDDLE LEVEL or not. In the case where the remaining battery energy corresponds to MIDDLE LEVEL, the flow moves to step S5054.

In step S5054, the monitoring mode selection unit 211 of the communication terminal selects EMERGENCY SIGNAL MONITORING MODE_MIDDLE as a monitoring mode for activating the second receiving unit 207. As shown in FIG. 3, in the case of EMERGENCY SIGNAL MONITORING MODE_MIDDLE, the cycle with which the second receiving unit 207 is activated is shorter than the cycle in the case of EMERGENCY SIGNAL MONITORING MODE_LOW. In the case where the flow reaches step S5054, the remaining battery energy is not LOW LEVEL, and the communication terminal has a remaining battery energy that is relatively sufficient for receiving the first warning information from the first communication system. Therefore, it is advantageous to increase the probability of receiving the second warning information by slightly increasing the frequency of monitoring the second warning information from the second communication system.

In step S5053, in the case where the remaining battery energy does not correspond to the level of middle quality (MIDDLE LEVEL), the flow moves to step S5055.

In step S5055, it is determined whether the remaining battery energy corresponds to HIGH LEVEL or not. In the case where the remaining battery energy corresponds to HIGH LEVEL, the flow moves to step S5056.

In step S5056, the monitoring mode selection unit 211 of the communication terminal selects EMERGENCY SIGNAL MONITORING MODE_HIGH as a monitoring mode for activating the second receiving unit 207. As it is shown in FIG. 3, in the case of EMERGENCY SIGNAL MONITORING MODE_HIGH, the second receiving unit 207 is activated all the time. In the case where the flow reaches step S5056, the remaining battery energy is HIGH LEVEL, and the communication terminal has sufficient remaining battery energy. Therefore, it is advantageous to increase the probability of receiving the second warning information by significantly increasing the frequency of monitoring the second warning information from the second communication system. Thereafter, processes that have already been described are performed.

### << 3. 3 A case of selecting a monitoring mode based on a predefined procedure >>

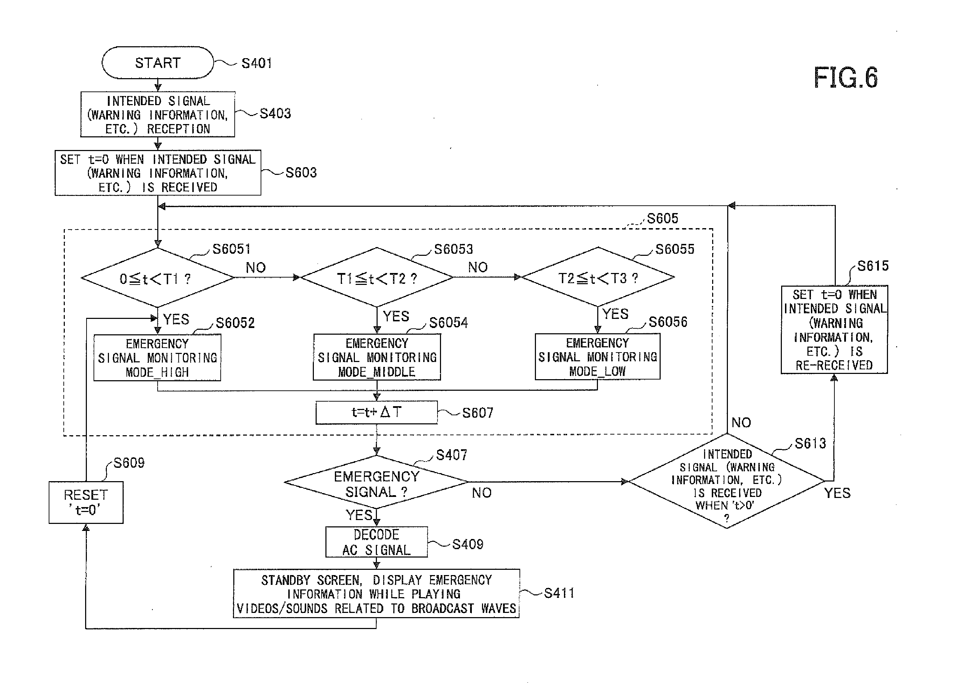

The monitoring mode may be determined based on a view point other than the methods shown in FIG. 4 and FIG. 5. FIG. 6 shows an example of operation in the case of selecting a monitoring mode based on a predefined procedure. The same referral numbers are given to the processes that are already described in FIG. 4, and redundant description will be omitted.

In step S403, in the case where an emergency situation such as, for example, an earthquake occurs, the communication terminal receives an email message (intended signal) by the Cell Broadcast Service (CBS).

In step S603, the value of t, which is a timer for switching the monitoring mode, is set at zero (0). The value of the timer t is set using "minute" as a unit, but other units of time may be used.

In step S605, the second receiving unit 207 is activated, and the communication terminal is enabled to receive digital terrestrial television broadcasting waves according to one of the monitoring modes.

In step S6051, it is determined whether the value of the timer t is equal to or more than zero (0) and less than T1. For the sake of convenience, the value of the timer t is supposed to be determined to belong to one of three ranges among 0, T1, T2, and T3, which is not essential for the present invention. Any number of value ranges, equal to or more than two, may be specified corresponding to the number of monitoring modes to be used. In the case where the value of the timer t is equal to or more than zero (0) and less than T1, the flow moves to step S6052.

In step S6052, the monitoring mode selection unit 211 select EMERGENCY SIGNAL MONITORING MODE_HIGH as a monitoring mode for activating the second receiving unit 207.

In step S6051, in the case where the value of the timer t is not equal to or more than zero (0) and less than T1, the flow moves to step S6053.

In step S6053, it is determined whether the value of the timer t corresponds to equal to or more than T1 and less than T2. In the case where the value of the timer t corresponds to equal to or more than T1 and less than T2, the flow moves to step S6054.

In step S6054, the monitoring mode selection unit 211 select EMERGENCY SIGNAL MONITORING MODE_MIDDLE as a monitoring mode for activating the second receiving unit 207.

In step S6053, in the case where the value of the timer t does not correspond to equal to or more than T1 and less than T2, the flow moves to step S6055.

In step S6055, it is determined whether the value of the timer t corresponds to equal to or more than T2 and less than T3. In the case where the value of the timer t corresponds to equal to or more than T2 and less than T3, the flow moves to step S6056.

In step S6056, the monitoring mode selection unit 211 select EMERGENCY SIGNAL MONITORING MODE_LOW as a monitoring mode for activating the second receiving unit 207.

In step S607, the value of the timer t is increased by ΔT. The ΔT is an increasing amount of time set according to certain appropriate criteria.

In step S407, it is determined whether the AC signal included in communication signals of the second communication system includes the second warning information (emergency signal) or not. In the case where the emergency signal is included, the flow moves to step S409.

In step S409, the second communication signal processing unit 209 of the communication terminal decodes the AC signal and extracts the second warning information.

In step S411, the extracted second warning information is provided to the user by the user interface unit 205. In the case where the second warning information can be provided to the user in step S411, it is expected that the communication terminal is able to receive appropriately communication signals from the second communication system thereafter. In this case, it is preferable to continue obtaining the second warning information, whose information volume is large, from the second communication system, and providing it to the user. Therefore, the flow moves to step S6052, and the second warning information is monitored frequently. But the value of the timer t is reset to zero (0). This is for coordinating the case where the flow comes to step S6052 from step S6051 and the case where the flow comes from step S411.

On the other hand, in step S407, in the case where it is determined that the second warning information is not included in the AC signal, the flow moves to step S613 and returns to step S605 with or without going through step S615.

In step S613, the communication terminal checks whether an email message (intended signal) by the Cell Broadcast Service is received or not. In the case where the intended signal is not received, the flow returns to step S605 (to be more precise, step S6051). In the case where the intended signal is received, the flow moves to step S615, the value of the timer t is reset to zero (0), and the flow returns to step S605 (to be more precise, step S6051).

In the case where the flow returns to step S605 from step S613 without going through step S615, the value of the timer t is bigger than zero (0) because it is increased in step S607. Therefore, one of three monitoring modes is selected. On the other hand, in the case where the flow returns to step S605 from step S613 going through step S615, the flow always reaches step S6052 because the value of the timer t is set at zero (0), warning information is frequently monitored by EMERGENCY SIGNAL MONITORING MODE_HIGH. Because in the case where the intended signal is received, the emergency situation is not removed yet.

In the case of an example shown in FIG. 6, because the monitoring mode is switched in accordance with the increase of the value of the timer, it is possible to perform the battery energy saving in a simple manner while reliably obtaining the warning information.

Methods of changing monitoring modes described in the above sections "3. 1", "3. 2", and "3. 3" are just examples, and the monitoring mode may be switched based on a different view point. Furthermore, of these multiple methods for switching monitoring modes, two or more than two methods may be combined to be used. In the case where multiple switching methods are combined, it is preferable to give priorities to the methods. For example, priorities may be given to switching methods based on the remaining battery energy (3. 2), the reception quality (3. 1), and the elapsed time (3. 3), with priorities given from high to low in this order. For example, only in the case where the sufficient remaining battery energy is remaining, monitoring modes are selected based on the reception quality or the elapsed time, and in the case where the sufficient remaining battery is not remaining, regardless of the reception quality or the elapsed time, a monitoring mode with a long cycle may be selected.

Communication terminals and warning information obtaining methods according to embodiments are described above, but the present invention is not limited to the above embodiments, and various modifications and refinements may be made without departing from the scope of the present invention. For example, the present invention can be applied to any appropriate mobile communication systems in which warning information is reported to users using an AC signal. For the sake of convenience, the present embodiments are described using specific numbers in order to facilitate understanding of the invention, but these numbers are used just as examples and, unless otherwise noted, any appropriate number can be used. For the sake of convenience, the present embodiments are described using specific mathematical expressions in order to facilitate understanding of the invention, but these mathematical expressions are used just as examples and, unless otherwise noted, any appropriate mathematical expression can be used. Division of embodiments or items is not essential for the present invention, and things described in two or more items may be used in combination as necessary, or a thing described in an item may be applied to a thing described in a different item (as long as it does not conflict). Borders of function units or processing units in functional block diagrams do not necessarily correspond to borders of physical components. Operations of multiple function units may be performed in one physical component, or operations of one function unit may be performed by multiple physical components. For the sake of convenience, devices of the present embodiments are described using a functional block diagram, but those devices may be realized as hardware, software, or combination of both. The software may be provided in a Random Access Memory (RAM), a Flash memory, a Read-Only Memory (ROM), an EPROM, an EEPROM, a register, a hard disk (HDD), a removable disk, a CD-ROM, a database, a server, or any other memory media.

The present application is based on and claims the benefit of priority of Japanese Priority Application No. 2011-226223 filed on October 13, 2011 the entire contents of which are hereby incorporated by reference.

### DESCRIPTION OF THE REFERENCE NUMERALS

- 201: First receiving unit
- 203: First communication signal processing unit
- 205: User interface unit
- 207: Second receiving unit
- 209: Second communication signal processing unit
- 211: Monitoring mode selection unit
- 213: Activation control unit

## Claims

1. A communication terminal comprising:
a first receiving unit configured to receive communication signals in a first communication system,
a second receiving unit configured to receive communication signals in a second communication system,
a monitoring mode selection unit configured to select a monitoring mode from a plurality of the monitoring modes with different cycles for activating the second receiving unit,
an activation control unit configured to activate the second receiving unit according to the monitoring mode selected by the monitoring mode selection unit in the case where the first receiving unit receives communication signals including first warning information, and
an interface unit configured to provide a user with second warning information extracted from communication signals received by the second receiving unit.

2. The communication terminal as claimed in claim 1, wherein the monitoring mode selection unit, as the quality of communication signals received by the first receiving unit becomes better, selects a monitoring mode with a longer cycle for activating the second receiving unit.

3. The communication terminal as claimed in claim 1, wherein the monitoring mode selection unit selects a monitoring mode with a longer cycle for activating the second receiving unit as the remaining battery of the communication terminal becomes less.

4. The communication terminal as claimed in claim 1, wherein the monitoring mode selection unit selects monitoring modes from the plurality of the monitoring modes, one by one in a predefined order in accordance with elapsed time.

5. The communication terminal as claimed in claim 1, wherein the first communication system is a cellular type mobile communication system and the second communication system is a communication system that provides digital terrestrial television broadcasting.

6. The communication terminal as claimed in claim 5, wherein an AC signal is included in communication signals received by the second receiving unit.

7. The communication terminal as claimed in claim 6, wherein, in the case where the second warning information is not included in the AC signal, in the case where the first receiving unit receives communication signals, the monitoring mode selection unit selects the monitoring mode with the shortest cycle for activating the second receiving unit.

8. The communication terminal as claimed in claim 6, wherein, in the case where the second warning information is not included in the AC signal, in the case where the first receiving unit does not receive communication signals, the monitoring mode selection unit reselects a monitoring mode from the plurality of monitoring modes with different cycles for activating the second receiving unit.

9. A warning information obtaining method comprising steps of :
receiving communication signals including a first warning information in a first communication system,
selecting a monitoring mode from a plurality of the monitoring modes with different cycles for activating a second receiving unit configured to receive communication signals in a second communication system,
activating the second receiving unit according to the selected monitoring mode, and
providing a user with second warning information extracted from communication signals received by the second receiving unit.
